Europäisches Patentamt

(19) European Patent Office

Office européen des brevets

(11) Veröffentlichungsnummer: **0 163 037**
**B1**

(12) **EUROPÄISCHE PATENTSCHRIFT**

(45) Veröffentlichungstag der Patentschrift:
28.02.90

(51) Int. Cl.⁵: **G 05 D 11/04**, G 05 D 11/00,
B 01 F 15/04, G 01 G 19/30

(21) Anmeldenummer: 85103467.8

(22) Anmeldetag: 23.03.85

(54) Dosiervorrichtung.

(30) Priorität: 25.05.84 DE 3419485

(43) Veröffentlichungstag der Anmeldung:
04.12.85 Patentblatt 85/49

(45) Bekanntmachung des Hinweises auf die Patenterteilung:
28.02.90 Patentblatt 90/09

(84) Bennante Vertragsstaaten:
AT BE CH DE FR GB LI NL

(56) Entgegenhaltungen:
EP-A-0 003 563
CH-A-642 744
DE-A-3 201 221
DE-A-3 411 155
DE-B-2 839 204
US-A-4 228 924

PATENT ABSTRACTS OF JAPAN, Band 5, Nr. 77 (P-62) 749 , 21. Mai 1981; & JP - A - 56 24527 (MATSUI) 09.03.1981

(73) Patentinhaber: FECO-Industrieanlagenbau GmbH
Essener Strasse 93
D-2000 Hamburg 62 (DE)

(72) Erfinder: Feldmann, Heinz-Gustav
Fährkrogweg 4
D-2000 Hamburg 65 (DE)

(74) Vertreter: Hansmann, Dierk, Dipl.-Ing.
Jessenstrasse 4
D-2000 Hamburg 50 (DE)

**Beschreibung**

Die Erfindung bezieht sich auf ein Dosiersystem für Flüssigkeiten und Pasten zur Herstellung von Materialmischungen aus verschiedenen Komponenten nach dem Oberbegriff des Anspruch 1.

Vorrichtungen dieser Art dienen für Ansätze im 100 bis 1 000 kg-Bereich, wobei eine entsprechend große Waage gewählt werden muß. Hierdurch können Hauptkomponenter sehr gut und schnell dosiert werden; es sind jedoch in einer Mischung benötigte Kleinkomponenten nicht mehr erfaßbar, da die Genauigkeit der Waage dieses nicht zuläßt. Selbstverständlich ist es auch möglich, eine relativ kleine Waage zu wählen, um die Kleinkomponenten exakt dosieren zu können, aber hierdurch können dann nicht große Komponenten einer Mischung dosiert werden.

Nach der CH-A-642 744 ist bereits eine derartige Anordnung nach dem Oberbegriff des Anspruchs 1 bekannt. Jede zugeführte Komponente wird bei dieser Ausbildung aus Teilmengen gebildet, die über eine gravimetrische Dosiervorrichtung und eine volumetrische Kolbendosiervorrichtung zusammengestellt werden. Die Bestimmung der Teilmengen erfolgt dabei über eine Waage. Dieses Dosiersystem für Großkomponenten hat den Mangel, daß die über die Kolbendosiervorrichtung zuzuführende Teilmenge oftmals in der Größenordnung der Fehlertoleranz der Waage liegt und somit keine Verbesserung der Genauigkeit ermöglicht.

Die vorgenannten Probleme bei der Dosierung von unterschiedlichen Größenordnungen der einzelnen Komponenten sind in der Praxis, wie beispielsweise in der Farben- und Lackindustrie, für die Fertigung von großer Bedeutung. Hierbei werden nicht mehr alle Farbtöne von Grund auf aus einem Trockenpigment gefertigt, sondern besonders im Bereich von kleineren Ansätzen bis ca. 300 kg die verschiedenen gewünschten Farbtöne aus einer Anzahl von Basisfarbpasten - etwa 12 bis 16 verschiedene Farbpasten - zusammengemischt. Dieser Einzelfall kann jedoch auch besonders in der übrigen chemischen Industrie, Mineralölindustrie und auch Nahrungsmittelindustrie vorkommen, nämlich dergestalt, daß für Materialmischungen verschiedene Komponenten in einem Mischbehälter dosiert werden müssen, die z.T. aus großen Komponenten oder sogenannten Trägerstoffen und z.T. aus sehr kleinen Komponenten bis in den Bereich von wenigen ml, den sogenannten Additiven bestehen.

Die Aufgabe der Erfindung ist es, in Verbesserung der bekannten Anordnungen ein einfaches und kompaktes Dosiersystem zu schaffen, die mit einer Dosiereinheit eine Dosierung der Komponenten unterschiedlicher Größenordnungen mit der erforderlichen Genauigkeit aus einem Versorgungsbehälter ermöglicht und dabei auch die Zuführung von Komponenten wahlweise nach den unterschiedlichen Mischungen gewährleistet.

Die Lösung dieser Aufgabe erfolgt erfindungsgemäß durch die kennzeichnenden Merkmale des Anspruchs 1.

Hierdurch erfolgt keine Festlegung auf die zu dosierende Menge und es können sowohl Großkomponenten als auch Kleinkomponenten des gleichen Stoffes dosiert werden, so daß den Bedürfnissen je nach Mischung Rechnung getragen wird. Durch diesen Aufbau gelingt es, eine Substanz aus einem Versorgungsbehälter mit einer Einheit und einer Zuführung auf kleinem Raum die Vorteile der gravimetrischen Dosierung und Kolbendosierung zu vereinigen.

Eine günstige kompakte Ausbildung wird dadurch geschaffen, daß die Kolbendosiervorrichtung und gravimetrische Dosiervorrichtung in einem gemeinsamen Gehäuseblock angeordnet sind.

Um eine Anordnung zur Dosierung von Stoffen, die zum Sedimentieren neigen, zu schaffen, wird vorgeschlagen, daß die gemeinsame Materialzuführung aus einer Ringleitung mit einem Zulauf und einem Ablauf gebildet ist, die durch die hintereinander geschalteten Zuführräume der Kolbendosiervorrichtung und der Dosiervorrichtung zur laufenden Durchströmung geführt ist. Zur Anpassung an die vorliegenden Dosierverhältnisse ist vorgesehen, daß die Antriebsorgane für die Kolbendosiervorrichtung und die gravimetrische Dosiervorrichtung über Stellelemente mit Schaltstufen für die unterschiedliche Dosiergeschwindigkeit gesteuert werden.

Eine günstige Abtaststeuerung besteht darin, daß die eine abtastende Einrichtung durch eine Hülse mit Nuten auf der Kolbenstange und einem ortsfesten induktiv arbeitenden Nährungsschalter gebildet ist.

In der Zeichnung ist ein Ausführungsbeispiel der Erfindung schematisch dargestellt. Es zeigen:

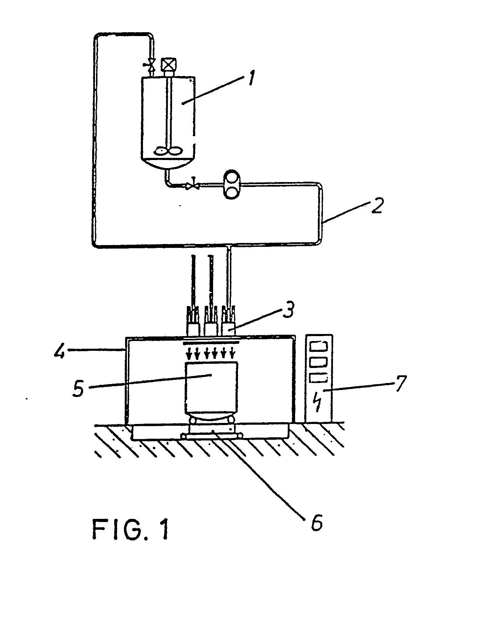

Figur 1 einen prinzipiellen Aufbau einer Dosiervorrichtung und nur einem ausgeführten Versorgungsbehälter,

Figur 2 einen Aufbau einer Dosiereinheit mit einer Materialzuführung als Ringleitung und den entsprechenden Steuerelementen.

Die dargestellte Anordnung besteht aus Versorgungsbehältern 1 für jede Komponente, die über eine Materialzuführung 2 mit einer zugeordneten Dosiereinheit 3 verbunden ist. Hierbei sind einzelne Dosiereinheiten 3 parallel über eine Haltevorrichtung 4 oberhalb eines Mischbehälters 5 angeordnet. Der Mischbehälter 5 wird von Waage 6 aufgenommen, die über eine zentrale Steuereinheit 7 den Teil der Dosiereinheit 3 für die gravimetrische Zuführung steuert. Hierbei wird die Steuereinheit 7 auch für die Vorprogrammierung der gewünschten Mischung eingesetzt.

Die Dosiereinheit 3 wird im wesentlichen aus einem Gehäuseblock 8 gebildet, der mit einem Zulauf 9 versehen ist und ein Kolbendosiersystem für Kleinkomponenten sowie eine gravimetrische Dosiervorrichtung für Großkomponenten aufnimmt. Hierbei verzweigt sich der Zulauf 9 als Materialzuführung für beide Systeme.

Die gravimetrische Dosiervorrichtung wird durch ein Dosierventil gebildet, das durch einen Abdeckflansch 10 nach oben abgeschlossen ist. In ein Kopfstück 11 ist eine Platte 12 eingesetzt, die mit einem Faltenbalg 13 flüssigkeitsdicht verbunden ist. Mit seinem anderen Ende ist der Faltenbalg 13 an einem Ventilkegel 14 befestigt und ermöglicht die Hubbewegung des Ventilkegels 14 bei gleichzeitiger, wartungsfreier Abdichtung einer Kolbenstange 15 nach außen. Das eigentliche Ventil wird aus dem Ventilkegel 14 mit einem zugeordneten Ventilsitz 16, der sich in einer unteren Abschlußplatte 17 befindet und mit der Unterseite des Gehäuses 8 verbunden ist, gebildet.

Zum Öffnen des Ventiles 14, 16 ist ein Pneumatikzylinder 18 auf einer dafür vorgesehenen Trägerplatte 19 montiert. Der Pneumatikzylinder 18 ist in diesem Fall für einen 2-Stufen-Betrieb vorgesehen, d.h. über entsprechende Ansteuerungen mittels 3/2-Wege-Magnetventil 20 bzw. 21 wird das Ventil 14, 16 ganz oder nur teilweise geöffnet (Grobstrom/Feinstromdosierung). Um für die Teilöffnung des Ventils 14, 16 die Öffnungsweite einzustellen, besitzt der Pneumatikzylinder 18 auf seiner oberen Stirnseite eine gerändelte Einstellschraube 22, mit der die Öffnungsweite stufenlos in der Ansteuerung "Feindosierung" einstellbar ist. Geschlossen wird das Ventil 14, 16 über eine in den Faltenbalg 13 eingebaute Schließfeder 23. Die Steuerung der Mengen erfolgt dabei über die Waage 6, die über die Steuereinheit 7 die Befehle für die Ventile 20, 21 in bekannter Weise durchführt.

Das parallel zugeordnete Kolbendosiersystem zur volumetrischen Dosierung wird durch ein Zylinderrohr 24 und einem dazu passenden Kolben 25 gebildet. Die Dosierung wird dadurch erreicht, daß der Kolben 25 sich im Zylinderrohr 24 in der oberen Position befindet und damit eine Dosierbohrung des Zylinderrohres 24 freigibt. Da das Zylinderrohr 24 über den Zulauf 9 im oberen Bereich völlig mit dem zugeführten Produkt gefüllt ist, strömt bei Freiwerden der Dosierbohrung das Produkt in die Dosierbohrung ein und füllt diese vollständig aus. Nach Erreichen des oberen Totpunktes fährt der Kolben 25 wieder nach unten, taucht in die Dosierbohrung ein und preßt ab dem Punkt des Eintauchens in die Bohrung das darin befindliche Produkt nach unten durch ein Ausstoßventil 26, 27 aus. Das Ausstoßventil 26, 27 schließt in dem Moment durch die Kraft einer Schließfeder 38, indem der Kolben 25 den unteren Totpunkt erreicht und kein Produkt mehr verdrängt. Das Ausstoßventil 26, 27 dichtet ab. Der Ventilsitz 27 ist dabei in einer unteren Abschlußplatte 28 am Gehäuse 8 angeordnet.

Die auf- und abgehende Bewegung des Kolbens 25 wird durch einen Preßluftzylinder 29 auf der Trägerplatte 12 bewirkt.

Dieser Preßluftzylinder 29 wird parallel über zwei 3/2-Wege-Magnetventile 30, 31 angesteuert, um die verschiedenen Luftdurchsatzleistungen zu haben und somit der Kolbendosierer mit zwei verschiedenen Geschwindigkeiten, nämlich einer Schnelldosierung und einer Feindosierung je nach Ansteuerung des einen oder anderen Ventiles 30 bzw. 31 betrieben wird.

Die Abdichtung des Kolbens oben im Gehäuse erfolgt durch eine obere Abschlußplatte 32 mit eingesetzten Dichtringen. An dieser Abschlußplatte 32 ist ein Tauchrohr 33 befestigt, durch das der Kolben 25 hindurchgeführt wird. Das Tauchrohr 33 ist mit einer Spülflüssigkeit gefüllt, die den Zweck hat, ein Antrocknen eines Produktfilmes auf dem Kolben 25 zu verhindern, da je nach Produktbeschaffenheit ein nach längerer Stillstandzeit des Gerätes angetrockneter Produktfilm die Kolbenabdichtungen zerstören kann.

Um mit dem Kolbendosierer in kleineren Einheiten als das Volumen eines ganzen Hubes dosieren zu können, ist an der Kolbenstange 34 eine Einrichtung befestigt, die über eine induktiven Abgriff es ermöglicht, den Dosierhub der Kolbenstange 34 in eine Anzahl von Teilschritten aufzugliedern. Die Anzahl der Teilschritte richtet sich nach den Impulszähen auf der Einrichtung. Die Einrichtung besteht aus einer Hülse 35 mit einer bestimmten Anzahl Nuten 36 oder einer Zahnstange, deren Nuten bzw. Zähne bei Bewegung des Kolbens 25 über einen induktiv arbeitenden Näherungsschalter 37, der an einer Konsole am Gehäuse 8 des Dosierers befestigt ist, abgegriffen werden und an einen elektronischen Zähler der Steuereinheit 7 zur Auswertung weitergleitet werden.

Durch diese spezielle Einrichtung ist es möglich, nicht nur ganze Hübe, sondern für die Dosierung Teilhübe entsprechend der gewählten Teilung der Hülse 35 oder Zahnstange vorzunehmen. Für die Dosieraufgabe werden nicht ganze Hübe, sondern dann die gewünschte Anzahl Teilhübe durch Impulse vorgegeben.

Hierdurch ist es möglich, über die Steuereinheit 7, die entsprechende Programme beinhaltet, Mischungen herzustellen, die sowohl Großkomponenten als auch Kleinkomponenten beinhaltet und auch eine wechselnde Einstellung gemäß den unterschiedlichen Anforderungen durchführbar ist.

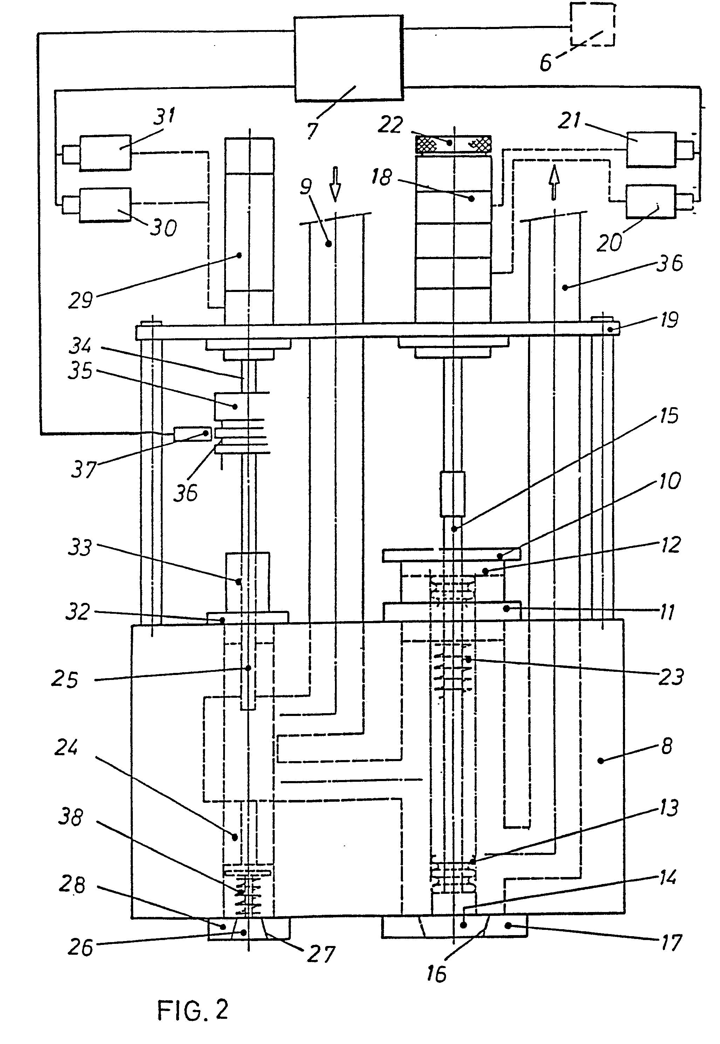

Gemäß Fig. 2 dient die Materialzuführung 9 als Zulauf und ist als Ringleitung mit einem Ablauf 36 als Rückspülleitung versehen. Hierbei wird das zugeführte Material zunächst durch die Kammer des Kolbendosiersystems und von dort durch das volumetrische Dosiersystem geführt, um Produkte zu verarbeiten, die zum Sedimentieren neigen. Weiterhin ist aus dieser Darstellung die Zuordnung der Steuerung zu entnehmen.

## Patentansprüche

1. Dosiersystem für Flüssigkeiten und Pasten zur Herstellung von Materialmischungen aus verschiedenen Komponenten, mit jeweils einem jeder Komponente zugeordneten Versorgungsbehälter (1), aus dem mittels einer Versorgungsleitung (2) über eine diesem zugeordnete Dosierein-

heit (3) die Komponente einem Mischbehälter (5) zugeführt wird, mit einer in der Dosiereinheit (3) angeordneten gravimetrischen Dosiervorrichtung (10 - 23) für große Dosiermengen, mit einer Waage (6), welche die dem Mischbehälter (5) zugeführte Menge erfaßt und einer zentralen Steuereinheit (7) zuführt, welche über ein von ihr gesteuertes der gravimetrischen Dosiervorrichtung zugeordnetes Abfüllventil (14, 16) die dem Mischbehälter zugeführte Menge einstellt, mit einer in der Dosiereinheit (3) angeordneten volumetrischen Kolbendosiervorrichtung (24 - 37) für kleine Dosiermengen, welche der gravimetrischen Dosiervorrichtung (10 - 23) parallel zugeordnet ist, wobei die Dosiereinheit (3) einen gemeinsamen Zulauf (9) als Materialzuführung für beide Dosiervorrichtungen (10 - 23; 24 - 37) aufweist, mit einem der volumetrischen Kolbendosiervorrichtung zugeordneten Abfüllventil (26, 27), welches gesteuert von der zentralen Steuereinheit (7) diese kleinen Dosiermengen einstellt, *dadurch gekennzeichnet*, daß die Steuereinheit (7) Programme beinhaltet, welche die Abfüllventile (14, 16; 26, 27) derart steuern, daß Großkomponenten vollständig über die gravimetrische Dosiervorrichtung (10 - 23) und Kleinkomponenten als Additive vollständig über die volumetrische Kolbendosiervorrichtung (24 - 37) in den Mischbehälter (5) eingebracht werden, und daß die volumetrische Kolbendosiervorrichtung eine den Kolbenhub schrittweise abtastende Einrichtung (35, 36; 37) aufweist, deren Ausgangsimpulse der Steuereinheit (7) zur Auswertung weitergeleitet werden, und daß die Steuereinheit (7) über das Antriebsorgan (29) für die Kolbendosiervorrichtung den Hub des Kolbens (25) durch programmierte Teilschritte einstellt.

2. Dosiersystem nach Anspruch 1, dadurch gekennzeichnet, daß die Kolbendosiervorrichtung (24 bis 37) und die gravimetrische Dosiervorrichtung (10 bis 23) in einem gemeinsamen Gehäuseblock (8) angeordnet sind.

3. Dosiersystem nach Anspruch 1 oder 2, dadurch gekennzeichnet, daß die gemeinsame Materialzuführung aus einer Ringleitung mit einem Zulauf (9) und einem Ablauf (36) gebildet ist, die durch die hintereinandergeschalteten Zuführräume der Kolbendosiervorrichtung (24 - 37) und der Dosiervorrichtung (10 - 23) zur laufenden Durchströmung geführt ist.

4. Dosiersystem nach Anspruch 1 bis 3, dadurch gekennzeichnet, daß die Antriebsorgane (29 bzw. 18) für die Kolbendosiervorrichtung (24 bis 37) und die gravimetrische Dosiervorrichtung (10 bis 23) über Stellelemente (30, 31 bzw. 20, 21) mit Schaltstufen für unterschiedliche Dosiergeschwindigkeiten gesteuert werden.

5. Dosiersystem nach Anspruch 1 bis 4, dadurch gekennzeichnet, daß eine abtastende Einrichtung (35, 36, 37) durch eine Hülse (35) mit Nuten (36) auf der Kolbenstange (34) und einem ortsfesten

induktiv arbeitenden Näherungsschalter (37) gebildet ist.

## Claims

1. A metering system for liquids and pastes and for producing mixtures of materials made up of various components, comprising a supply container (1) for each component and from which the component is supplied to a mixing container (5) via a supply pipe (2) and through an associated metering device (3), comprising a gravimetric device (10 - 23) for metering large quantities and disposed in the metering unit (3), a balance (6) which determines the amount supplied to the mixing container (5) and communicates it to a central control unit (7) which, via a filling valve (14, 16) controlled by it and associated with the gravimetric metering device, adjusts the amount supplied to the mixing container, a volumetric piston device (24 - 37) for metering small amounts and disposed in the metering unit (3) and connected in parallel with the gravimetric device (10 - 23), the metering device (3) having a common inlet (9) for supplying material to both the gravimetric and the piston device (10 - 23; 24 - 27), and a filling valve (26, 27) associated with the volumetric piston device and, under the control of the central control unit (7), setting the small metered amounts, *characterised in that* the control unit (7) contains programmes which control the filling valves (14, 16; 26, 27) so that large components are introduced into the mixing container (5) completely through the gravimetric device (10 - 23) and small components in the form of additives completely through the volumetric piston device (24 - 37), and the volumetric piston device comprises a means (35, 36; 37) which scans the piston stroke in stepwise manner and which outputs pulses which are transmitted to the control unit (7) for evaluation, and the control unit (7) adjusts the stroke of the piston (25) via programmed partial steps, through the drive means (29) for the piston device.

2. A metering system according to claim 1, characterised in that the piston device (24 to 37) and the gravimetric device (10 to 23) are disposed in a common casing block (8).

3. A metering system according to claim 1 or 2, characterised in that the common material supply means comprises a closed circuit having an inlet (9) and an outlet (36) and guided for continuous flow through the series-connected supply chambers of the piston device (24 - 37) and the gravimetric device (10 - 23).

4. A metering system according to claims 1 - 3, characterised in that the drive means (29, 18) for the piston device (24 - 37) and the gravimetric device (10 - 23) are controlled via servo elements (30, 31 and 20, 21) having switching stages for various metering speeds.

4

5. A metering system according to claims 1 - 4, characterised in that a scanning means (35, 36, 37) is in the form of a sleeve (35) having grooves (36) on the piston rod (34) and a stationary inductively-operating proximity switch (37).

## Revendications

1. Système de dosage pour liquides et pâtes en vue de préparer des mélanges de matières constitués de différents composants, ce système comprenant chaque fois un récipient d'alimentation (1) attribué a chaque composant et duquel au moyen d'une conduite d'alimentation (2) et via une unité de dosage (3) attribuée à ce récipient, le composant est acheminé à un récipient de mélange (5), un dispositif de dosage gravimétrique (10 - 23) adapté dans l'uni té de dosage ( 3) pour de grandes quantités de dosage, une balance (6) qui reçoit la quantité acheminée au récipient de mélange (5) en l'acheminant à une unité centrale de commande (7) qui, via une soupape de remplissage (14, 16) commandée par cette unité et attribuée au dispositif de dosage gravimétrique, règle la quantité acheminée au récipient de mélange, un dispositif de dosage volumétrique à piston (24, 37) adapté dans l'unité de dosage (3) pour de petites quantités de dosage, ce dispositif étant attribué parallèlement au dispositif de dosage gravimétrique (10 - 23), l'unité de dosage (3) comportant une alimentation commune (9) comme alimentation de matière pour les deux dispositifs de dosage (10 - 23; 24 - 37), une soupape de remplissage (26, 27) attribuée au dispositif de dosage volumétrique à piston et qui, sous la commande de l'unité centrale de commande (7), règle ces faibles quantités de dosage, *caractérisé en ce que* l'unité de commande (7) comporte des programmes qui commandent les soupapes de remplissage (14, 16; 26, 27) de telle sorte que les gros composants soient introduits complètement via le dispositif de dosage gravimétrique (10 - 23) et que les petits composants soient introduits complètement comme additifs dans le récipient de mélange (5) via le dispositif de dosage volumétrique à piston (24 - 37), et en ce que le dispositif de dosage volumétrique à piston comporte un dispositif (35, 36 ; 37) palpant pas à pas la course du piston et dont les impulsions de sortie sont acheminées à l'unité de commande (7) en vue de leur évaluation, tandis que l'unité de commande (7) règle, via l'organe d'entraînement (29) pour le dispositif de dosage à piston, la course de ce piston (25) par des pas partiels programmes.

2. Système de dosage selon la revendication 1, *caractérisé en ce que* le dispositif de dosage à piston (24 à 37) et le dispositif de dosage gravimétrique (10 à 23) sont disposés dans un logement commun (8).

3. Système de dosage selon la revendication 1 ou 2, *caractérisé en ce que* l'alimentation commune de matière est formée d'une conduite annulaire comportant une alimentation (9) et une évacuation (36), cette alimentation étant acheminée à travers les espaces d'alimentation successifs au dispositif de dosage à piston (24 - 37) et au dispositif de dosage (10 - 23) pour une circulation continue.

4. Système de dosage selon les revendications 1 à 3, *caractérisé en ce que* les organes d'entraînement (29 ou 18) pour le dispositif de dosage à piston (24 à 37) et le dispositif de dosage gravimétrique (10 à 23) sont commandés par des éléments de réglage (30, 31 ou 20, 21) comportant des étages de commutation pour différentes vitesses de dosage.

5. Système de dosage selon les revendications 1 à 4, *caractérisé en ce qu'*un dispositif palpeur (35, 36, 37) est formé par une douille (35) comportant des rainures (36) sur la tige de piston (34), ainsi que sur un commutateur d' alimentation (37) fixe fonctionnant par induction.

FIG. 1

FIG. 2